# EUROPEAN PATENT APPLICATION

(11) **EP 0 899 299 A2**
(43) Date of publication of application: **03.03.1999**
(21) Application number: 98115396.8
(22) Date of filing: 17.08.1998
(51) Int. Cl.: C08L 23/28, C08L 21/00

(54) **Innerliner containing a blend of halobutyl and tin-coupled solution-polymerized rubber**

(30) Priority: 22.08.1997 US 916245
(71) Applicant: THE GOODYEAR TIRE & RUBBER COMPANY, Akron, Ohio 44316-0001 (US)
(72) Inventor: Beers, Roger Neil, Uniontown, Ohio 44685 (US); Benko, David Andrew, Munroe Falls, Ohio 44262 (US); Halasa, Adel Farhan, Bath, Ohio 44333 (US); Gross, Bill Bud, Stow, Ohio 44224 (US)
(74) Representative: Leitz, Paul

(57) **Abstract**

The present application relates to a tire innerliner and pneumatic tires containing the same, which are prepared from a composition comprising, based on 100 parts by weight of total rubber (phr), a blend containing 30 to 50 phr of a tin-coupled solution-polymerized rubber having a Tg ranging from -30°C to -60°C and 70 to 50 phr of a halobutyl rubber.

## Description

### Background of the Invention

The inner surface of a pneumatic tire is typically comprised of an elastomeric composition designed to prevent or retard the permeation of air from the tire's inner air chamber. It is often referred to as an innerliner. Rubbers, such as butyl and halobutyl rubber, which are relatively impermeable to air are often used as the major rubber component in the innerliners.

The innerliner is normally prepared by conventional calendering or milling techniques to form a strip of uncured compounded rubber of appropriate width which is sometimes referred to as a gum strip. Typically, the gum strip is the first element of the tire applied to a tire building drum, over and around which the remainder of the tire is built. When the tire is cured, the innerliner becomes an integral, co-cured, part of the tire. Tire innerliners and their methods of preparation are well known to those having skill in such art.

Halobutyl rubber is generally one of the most expensive rubbers used in a tire. Given the competitive tire market and the continued need to lower the cost of manufacturing tires without sacrificing properties, there exists a need to eliminate or substantially decrease the cost of innerliners which perform such an important function in the performance of a tire.

Emulsion and solution polymerized styrene butadiene rubbers are commonly used in the tread portion of a tire. Since such styrene butadiene copolymers are typically more economical than halobutyl rubbers, one would hope that such styrene butadiene copolymers could be utilized in other components such as an innerliner. Unfortunately, typical styrene butadiene copolymers suffer from unacceptable air permeabilities. Since a rubber used in an innerliner must have a low air permeability, the use of a significant amount of styrene butadiene copolymer in an innerliner would be expected to meet with failure.

U.S. Patent 5,491,196 discloses a halobutyl/solution-polymerized styrene-butadiene rubber innerliner. The solution-polymerized styrene-butadiene rubber has a Tg ranging from -45°C to -65°C.

Tin-coupled solution-polymerized rubbers are known for their use in making tire tread rubber compounds. For example, see US-A-4 732 927, 5 514 716, 5 587 420 and 5 268 439.

As can be appreciated by one skilled in the art, another critical property that an innerliner must exhibit is cold flexural properties. Simply stated, since an innerliner will be subject to low temperatures in use and that such temperatures along with the normal deformation of the innerliner lead to cracks, the elastomeric composition must exhibit cold flexural properties to avoid cracks and therefore air leaks.

### Summary of the Invention

The present invention relates to a tire innerliner and pneumatic tires containing the same, which are prepared from a composition comprising, based on 100 parts by weight of rubber (phr), a blend containing (a) 30 to 50 phr of a tin-coupled solution-polymerized rubber having a Tg ranging from -30°C to -60°C and (b) 70 to 50 phr of a halobutyl rubber.

### Detailed Description of the Invention

There is disclosed a tire innerliner prepared from a composition comprising, based on 100 parts by weight of rubber (phr), a blend of
(A) 30 to 50 phr of a tin-coupled solution-polymerized rubber having repeating units and a Tg ranging from -30°C to -60°C, wherein
   (1) 20 to 40 weight percent of the repeating units are derived from styrene;
   (2) 0 to 50 weight percent of the repeating units are derived from isoprene;
   (3) 5 to 40 weight percent of the repeating units have a 1,2-microstructure and are derived from butadiene;
   (4) 30 to 60 weight percent of the repeating units have a 1,4-microstructure and are derived from butadiene; and
   (5) 10 to 80 percent by weight of the polymer chains of said tin-coupled solution-polymerized rubber have a tin-carbon linkage.
(B) 70 to 50 phr of a halobutyl rubber.

In addition, there is disclosed a pneumatic tire having an innerliner prepared from a composition comprising, based on 100 parts by weight of rubber (phr), a blend of
(A) 30 to 50 phr of a solution polymerized polymer having repeating units and a Tg ranging from -30°C to - 60°C, wherein
   (1) 20 to 40 weight percent of the repeating units are derived from styrene;
   (2) 0 to 50 weight percent of the repeating units are derived from isoprene;
   (3) 5 to 40 weight percent of the repeating units have a 1,2-microstructure and are derived from butadiene;
   (4) 30 to 60 weight percent of the repeating units have a 1,4-microstructure and are derived from butadiene; and
   (5) 10 to 80 percent by weight of the polymer chains of said tin-coupled solution-polymerized rubber have a tin-carbon linkage.
(B) 70 to 50 phr of a halobutyl rubber.

The term "phr" is used herein to mean parts by weight per 100 parts by weight of total rubber.

The blend of rubber for use as a tire innerliner contains from 30 to 50 phr of a tin-coupled solution polymerized rubber having repeating units and a Tg ranging from -30°C to -60°C. Preferably, the solution polymerized rubber has a Tg ranging from -50 to -60°C. In amounts less than 30 phr, the economic incentives of the present invention are diminished. In amounts greater than 50 phr, undesirable properties result in terms of unacceptable air permeabilities and inferior cold flex properties. Preferably, this component is present in an amount ranging from 40 to 50 phr. The most preferred level of tin-coupled solution-polymerized rubber ranges from 40 to 45 phr. The tin-coupled solution-polymerized rubber is further characterized by (a) 20 to 40 weight percent of the repeating units being derived from styrene; (b) 0 to 50 weight percent of the repeating units being derived from isoprene; (c) 5 to 40 weight percent of the repeating units having a 1,2-microstructure and being derived from butadiene; and (d) 30 to 60 weight percent of the repeating units having a 1,4-microstructure and being derived from butadiene and 10 to 80 percent by weight of the polymer chains of the tin-coupled polymer having tin-carbon linkage. In a preferred embodiment, the tin-coupled solution-polymerized rubber is characterized by (a) 25 to 40 weight percent of the repeating units being derived from styrene; (b) 0 weight percent of the repeating units being derived from isoprene; (c) 20 to 40 weight percent of the repeating units having a 1,2-microstructure and being derived from butadiene; and (3) 40 to 60 weight percent of the repeating units have a 1,4-microstructure and being derived from butadiene. These solution-polymerized rubbers are characterized by a random distribution.

The tin-coupled rubbers for use in the innerliners of the present invention have from 10 to 80 percent by weight of the polymer chains of said rubber having a tin-carbon linkage. Preferably, from 50 to 80 percent by weight of the polymer chains have a tin-carbon linkage.

The tin-coupled rubbers may be prepared in accordance with a number of different methods. For example, US-A-5 268 438, which is incorporated herein in its entirety, discloses the use of an anionic polymerization initiator which is the reaction product of a triorgano-substituted tin halide or a hexaorgano-substituted di-tin compound with lithium metal in the presence of a suitable solvent. According to this method, the initiator in the reaction product of from 93 to 99 percent by weight of the organotin compound and from 1 to 7 percent by weight lithium. The initiator is then used in a conventional anionic polymerization.

Another known method for preparing tin-coupled rubbers is taught in US-A-5 587 420. The tin-coupled rubbers are prepared by polymerizing a conjugated diene monomer(s) and a vinylaromatic hydrocarbon monomer using an organolithium initiator and adding an organotin compound between the time immediately after the start of the polymerization to a time before the end of the polymerization.

The rubber coupled with tin can also be produced by a known method as described, for example, in Japanese Patent Kokai (Laid Open) No. 308,011/88. To be more specific, styrene may be copolymerized with butadiene by means of solution polymerization in a hydrocarbon solvent and using an organic lithium compound as a polymerization initiator, to give a copolymer having a butadienyl-lithium bond at a polymerization terminal, which is then subjected to a coupling reaction with a halogenated tin compound or a halogenated silicon compound to produce the desired copolymer rubber. It can be preferred to add a small quantity of butadiene at the end of the copolymerization, so as to form the butadienyl-lithium bond.

Examples of compounds to be used for the coupling reaction include halogenated tin compounds, such as tin tetrachloride, phenyltin trichloride and tributyltin chloride. The content of the 1,2-structure in the butadiene unit can be controlled by using a Lewis base, such as ethers or tertiary amines, and changing the kind and quantity thereof, or by selecting appropriate polymerization conditions including a polymerization temperature. It is preferred, considering economic aspects and side reactions, that the copolymerization be carried out at a temperature of 0°C to 150°C, although the polymerization temperature may be varied depending on the desired microstructure. The halogenated tin compound is used for the coupling reaction preferably in an amount of 0.08 to 0.5 equivalent, per equivalent weight of lithium atoms at the polymerization terminals.

Tin-coupled styrene-isoprene-butadiene rubbers for use in the present invention may be prepared in accordance with the teachings of US-A-5 514 756. This process includes solution polymerizing in an organic solvent from 5 to 40 weight percent styrene, from 1 to 10 weight percent isoprene and from 50 to 94 weight percent 1,3-butadiene, based on total monomers. The polymerization conditions are conducted until at least a conversion of 90 percent to produce a living styrene-isoprene-butadiene terpolymer. The terpolymerization is initiated with an organolithium compound. The terpolymerization is conducted in the presence of a polar modifier at a molar ratio of polar modifier to the organolithium compound ranging from 0.5:1 to 5:1. The terpolymerization is conducted at a temperature ranging from 20°C to 150°. The living styrene-isoprene-butadiene terpolymer is then coupled with a coupling agent, such as tin tetrachloride, wherein the molar ratio of the coupling agent to the organolithium compound is within the range of 1:3 to 1:6. These tin-coupled styrene-isoprene-butadiene rubbers are comprised of repeat units which are derived from 5 to 40 weight percent styrene, from 1 to 10 weight percent isoprene and 50 to 94 weight percent 1,3-butadiene. Such rubbers have a glass transition temperature ranging from -20°C to -45°C. The number average molecular weight generally ranges from 250,000 to 400,000.

A particularly preferred tin-coupled rubber is commercially available from JSR under the designation JSR T51353. This tin-coupled SBR has 35 weight percent of the repeating units derived from styrene and 21 weight percent of the repeating units having 1,2-microstructure and derived from butadiene and 44 weight percent of the repeating units having 1,4-microstructure and derived from butadiene. The Tg of this rubber is approximately -51°C and the Mooney Viscosity is 74. Fifty percent by weight of the polymer chains have a tin-carbon linkage.

The halobutyl component of the blend used in the innerliner is selected from the group consisting of chlorobutyl rubber, bromobutyl rubber and mixtures thereof. This component is present in an amount ranging from 70 to 50 parts by weight, based on 100 parts by weight of rubber in the overall blend (phr). Preferably, this component is present in an amount ranging from 60 to 50 phr. The most preferred level of bromobutyl rubber ranges from 60 to 55 phr.

The term "chlorobutyl rubber" used herein generally means those rubbers obtained by chlorinating copolymers which are prepared from a polymerization mixture comprising isoolefins (e.g., isobutylene) and conjugated multiolefins (e.g., isoprene). The unmodified (nonchlorinated) copolymers are generally known as "butyl rubber."

Chlorinated butyl rubber may be prepared by contacting butyl rubber in a solution of 1 to 60 weight percent of butyl rubber in a substantially inert C₅-C₈ hydrocarbon solvent (e.g., pentane, hexane, heptane, etc) with chlorine gas for two seconds to 25 minutes (see US-A-3 099 644). The resultant chlorinated butyl rubber contains at least 0.5 weight percent based on copolymer and up to one chlorine atom per double bond initially present in the copolymer (see also US-A-2 944 578).

The term "bromobutyl rubber" used herein means brominated butyl rubber. Bromination may be carried out by contacting butyl rubber with bromine or appropriate bromine-containing compounds. The resultant brominated butyl rubber contains 0.5 to 3 bromine atoms per molecule of multiolefin. Typical brominating agents are molecular bromine, sodium hypobromite, sulfur bromide, N-bromosuccinimide, hydrogen bromide, etc. The bromination is advantageously conducted at temperatures of -50°C to +150°C, preferably 20°C to 60°C for one minute to several hours. The temperatures and time may be regulated so as to obtain the above bromine content.

The bromination may be carried out according to various methods. One method comprises preparing a solution of butyl rubber in a suitable unreactive organic solvent such as heptane, kerosene, toluene, chlorobenzene, trichloroethane, etc, and adding thereto gaseous or liquid bromine or a bromine compound. Another method comprises blending solid butyl rubber with a solid brominating agent such as N-bromosuccinimide which leads to allylic substitution. In such a case, the blend formed is preferably mill-mixed and advantageously heated to a temperature sufficient to brominate the solid butyl rubber. The milling pressure may be set higher or lower than atmospheric pressure, depending on the heating temperatures.

There are a number of commercial grades of halobutyl rubber which may be used in the present invention. For example, Exxon Corporation markets a bromobutyl rubber under the designation Exxon Bromobutyl 2222 which has a Mooney viscosity at 125°C of 27-37 and 2 percent by weight percent of halogen. In addition, Polysar Ltd markets a bromobutyl rubber under the designations Polysar Bromobutyl 2030 and 2030G which have a Mooney viscosity at 125°C of 26-36 and 2.1 percent by weight halogen.

In those instances where the producer of the innerliner desires to further lower the cost of production, one may substitute minor amounts of the halobutyl rubber with butyl rubber. Commercially available butyl rubber comprises a major proportion of isobutylene units and a minor proportion of isoprene units. Conventional high molecular weight butyl rubber generally has a number average molecular weight of 25,000 to 500,000, preferably 80,000 to 300,000, more preferably 100,000 to 250,000, and has a Wijs iodine number of 0.5 to 50, preferably 1 to 20. Low molecular weight butyl rubber has a number average molecular weight of 5,000 to 25,000, and mole percent unsaturation of 2 to 10.

Butyl rubber may be substituted in amounts up to 20 phr for the halobutyl rubber. Therefore, from 0 to a total of 20 phr of the chlorobutyl or bromobutyl rubber may be substituted with butyl rubber. In no instances should the level of chlorobutyl or bromobutyl rubber be below 50 parts by weight of the total rubber in the blend used to form the tire innerliner.

The blend of tin-coupled rubber and halobutyl rubber may be compounded with conventional rubber compounding ingredients known for use in innerliners. Conventional ingredients commonly used in rubber vulcanizates are, for example, carbon black, hydrocarbon resins, phenol-formaldehyde resins, zinc oxide, processing aids, antioxidants, antiozonants, stearic acid, activators, waxes, oils and peptizing agents. As known to those skilled in the art, the above ingredients are commonly used in conventional amounts. Typical additions of carbon black comprise from 10 to 100 phr, preferably 50 to 75 phr. Conventional carbon blacks having the ASTM Designations N330, N660, N774, N907, N908, N990 and N991 may be used. Typical amounts of tackifier or hydrocarbon resins comprise 2 to 10 phr. Typical amounts of processing aids comprise 1 to 5 phr. Typical amounts of antioxidant comprise 1 to 10 phr. Typical amounts of antiozonants comprise 1 to 10 phr. Typical amounts of stearic acid comprise 0.50 to 2 phr. Typical amounts of waxes comprise 1 to 5 phr. Typical amounts of oils comprise 2 to 30 phr. Typical amounts of phenol-formaldehyde resin comprise from 1 to 10 phr. Typical amounts of peptizers comprise 0.1 to 1 phr. The presence and relative amounts of the above additives are not an aspect of the present invention.

The vulcanization of the composition for use as an innerliner is generally conducted in the presence of a sulfur vulcanizing agent or zinc oxide or combinations thereof. Examples of suitable sulfur vulcanizing agents include elemental sulfur (free sulfur) or sulfur donating vulcanizing agents, for example, an amine disulfide, polymeric disulfide or sulfur olefin adducts. Preferably, the sulfur vulcanizing agent is elemental sulfur. As known to those skilled in the art, sulfur vulcanizing agents are used in amount ranging from 0.2 to 8.0 phr with a range of from 0.5 to 5.0 being preferred. Typical amounts of zinc oxide range from 1 to 5 phr, with a range of from 1 to 3 phr being preferred.

Accelerators are used to control the time and/or temperature required for vulcanization and to improve the properties of the vulcanizate. A single accelerator system may be used, i.e., primary accelerator in conventional amounts ranging from 0.3 to 5.0 phr. In the alternative, combinations of two or more accelerators may be used which may consist of a primary accelerator which is generally used in the larger amount (0.3 to 5.0 phr), and a secondary accelerator which is generally used in smaller amounts (0.05-1.0 phr) in order to activate and to improve the properties of the vulcanizate. Combinations of these accelerators have been known to produce a synergistic effect on the final properties and are somewhat better than those produced by either accelerator alone. In addition, delayed action accelerators may be used which are not effected by normal processing temperatures but produce satisfactory cures at ordinary vulcanization temperatures. Suitable types of accelerators that may be used are amines, disulfides, guanidines, thioureas, thiazoles, thiurams, sulfenamides, dithiocarbamate and xanthates. Preferably, the primary accelerator is a disulfide or sulfenamide. If a secondary accelerator is used, the secondary accelerator is preferably a guanidine, disulfide, dithiocarbamate or thiuram compound.

In practice, the above rubber compositions are used to form a layer or sheet. As known to those skilled in the art, the layer is produced by a press or passing a rubber composition through a mill, calender, multihead extruder or other suitable means. Preferably, the layer is produced by a calender because greater uniformity is believed to be provided. The uncured layer sheet is then constructed as an inner surface (exposed inside surface) of an uncured rubber tire structure, also known as the carcass. The innerliner is then sulfur-cocured with the tire carcass during the tire curing operation under conditions of heat and pressure. Vulcanization of the tire containing the innerliner of the present invention is generally carried out at temperatures of between 100°C and 200°C. Preferably, the vulcanization is conducted at temperatures ranging from 110°C to 180°C. Any of the usual vulcanization processes may be used, such as heating in a press or mold, heating with superheated steam or hot salt or in a salt bath. Preferably, the heating is accomplished in a press or mold in a method known to those skilled in the art of tire curing.

As a result of this vulcanization, the innerliner becomes an integral part of the tire by being cocured therewith as compared to being a simple adherent laminate. Typically, the innerliner of the present invention has an uncured gum thickness in the range of from 0.04-0.4 centimeters. Preferably, the innerliner has an uncured gum thickness in the range of from 0.08 to 0.2 centimeters. As a cured innerliner, the innerliner may have a thickness ranging from 0.02 to 0.35 centimeters. Preferably, as a cured innerliner, the thickness will range from 0.04 to 0.15 cm thickness.

The pneumatic tire with the integral innerliner may be constructed in the form of a passenger tire, truck tire or other type of bias or radial pneumatic tire.

The following examples are presented in order to illustrate but not limit the present invention. All parts are in terms of phr.

### Example 1

Eight samples were prepared to compare and contrast various aspects of the present invention. The eight samples were tested for their oxygen permeability and air permeability.

The oxygen permeabilities were measured on a MoCon Oxytran 10/50 coulemetric instrument following ASTM D-3985-1. The air permeabilities were measured according to ASTM D-1434.

As can be seen below in Table I, solution styrene butadiene rubber and tin-coupled solution styrene butadiene rubber were used alone and in combination with bromobutyl rubber. The respective oxygen permeabilities and remaining properties are listed in Table II. Table I also lists the respective amount of rubber as well as remaining ingredients in each rubber sample.

Each test sample was cured at 150°C by compression molding in a heated press for 36 minutes.

**TABLE I**

| Samples | 1 | 2 | 3 | 4 | 5 | 6 | 7 | 8 |
|---|---|---|---|---|---|---|---|---|
| Halobutyl Rubber¹ | 0 | 0 | 55 | 55 | 55 | 55 | 55 | 70 |
| S-SBR² | 100 | 0 | 45 | 0 | 0 | 45 | 0 | 0 |
| Sn-Coupled S-SBR³ | 0 | 100 | 0 | 45 | 45 | 0 | 45 | 30 |
| Carbon 510 Black⁴ | 60 | 60 | 60 | 60 | 60 | 60 | 60 | 60 |
| Processing Oil | 6 | 6 | 0 | 0 | 0 | 0 | 3 | 0 |
| Phenol-Formaldehyde Resin | 2 | 2 | 1 | 1 | 1 | 1 | 1 | 1 |
| Hydrocarbon Resin | 0 | 0 | 0 | 0 | 0 | 0 | 9 | 0 |
| Rosin Oil | 0 | 0 | 0 | 0 | 0 | 0 | 2 | 0 |
| Aromatic Processing Oil | 0 | 0 | 14 | 14 | 14 | 14 | 0 | 14 |
| Stearic Acid | 1 | 1 | 1 | 1 | 1 | 1 | 1 | 1 |
| Mercaptobenzylthiazole Disulfide | 1.5 | 1.5 | 1.5 | 1.5 | 1 | 1 | 1.25 | 1.25 |
| Zinc Oxide | 1 | 1 | 3 | 3 | 3 | 3 | 3 | 3 |
| Sulfur | 0.5 | 0.5 | 0.5 | 0.5 | 0.25 | 0.25 | 0.25 | 0.25 |
| Tetramethylthiuram Disulfide | 0.2 | 0.2 | 0.2 | 0.2 | 0 | 0 | 0.2 | 0 |
| Sodium Thiosulfate Pentahydrate | 0 | 0 | 0 | 0 | 0.5 | 0.5 | 0 | 0.25 |

| | | | | | | | | |
|---|---|---|---|---|---|---|---|---|
| ¹Bromobutyl rubber commercially obtained from Exxon Corporation under the designation Exxon Bromobutyl 2222, which has a Mooney viscosity at 125°C of 27-37 and 2 percent by weight of halogen. | | | | | | | | |
| ²Solution polymerized styrene-butadiene rubber commercially obtained from Firestone Synthetic Rubber & Latex Company under the designation Duradene™ 709. This SBR has a Tg of -56°C, a Mooney Viscosity of 55, 35 weight percent of the repeating units are derived from styrene; 11 weight percent of the repeating units has a 1,2-microstructure derived from butadiene; and 54 weight percent of the repeating units have a 1,4-microstructure and are derived from butadiene. | | | | | | | | |
| ³Tin-coupled solution polymerized styrene butadiene rubber commercially obtained from JSR under the designation JSR T5582. This rubber has a Tg of -51°C, a Mooney viscosity of 74, 35 weight percent of the repeating units are derived from styrene; 21 weight percent of the repeating units has a 1.2-microstructure derived from butadiene and 44 weight percent of the repeating units have a 1,4-microstructure and are derived from butadiene. Fifty weight percent of the polymer chains have a tin-carbon linkage. | | | | | | | | |
| ⁴N660. | | | | | | | | |

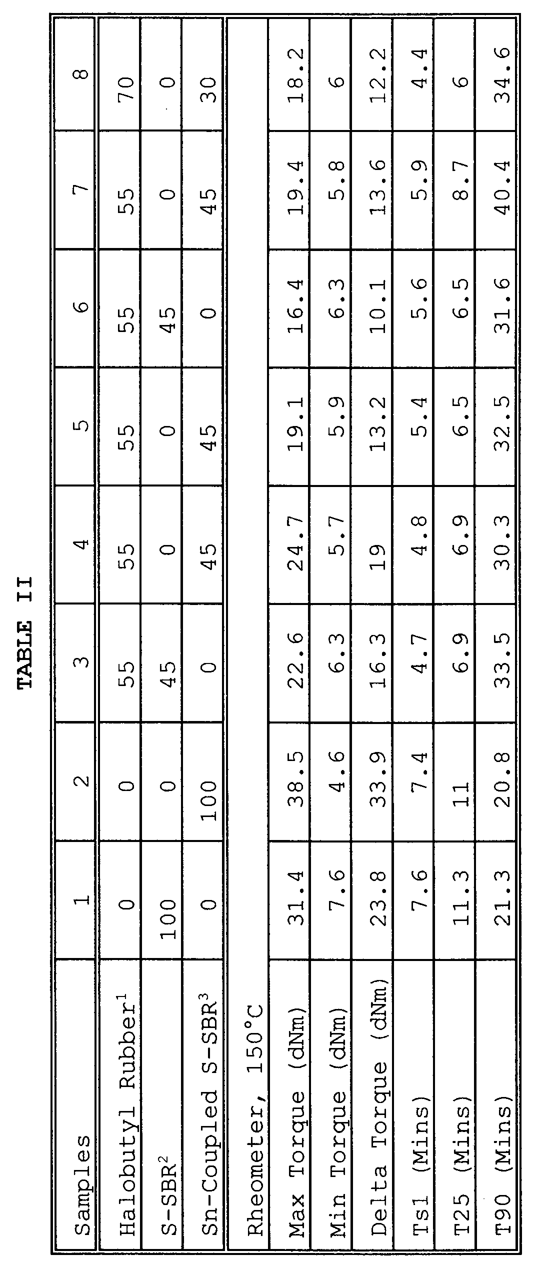

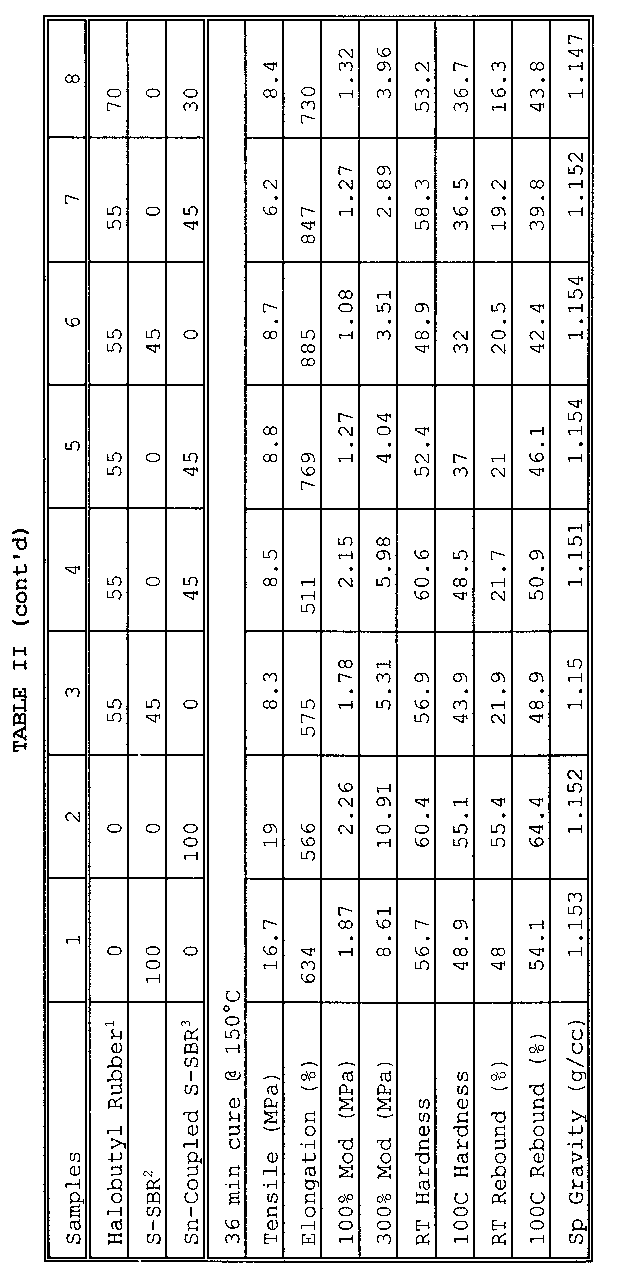

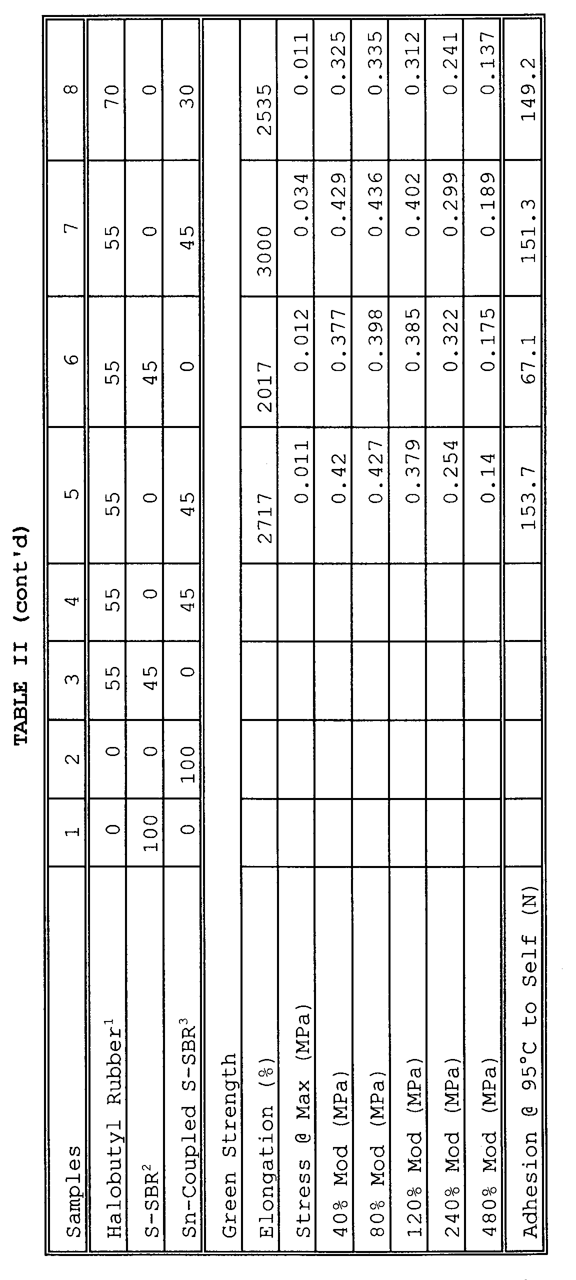

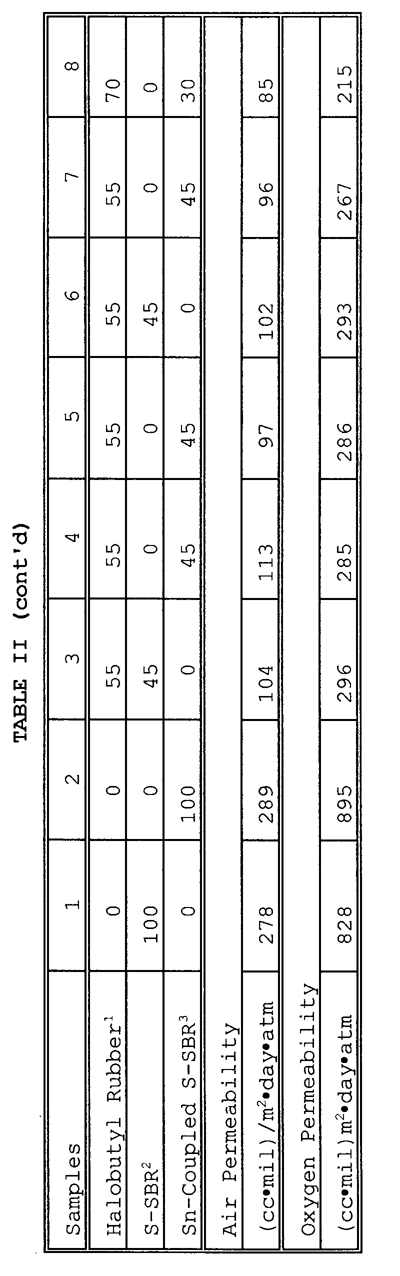

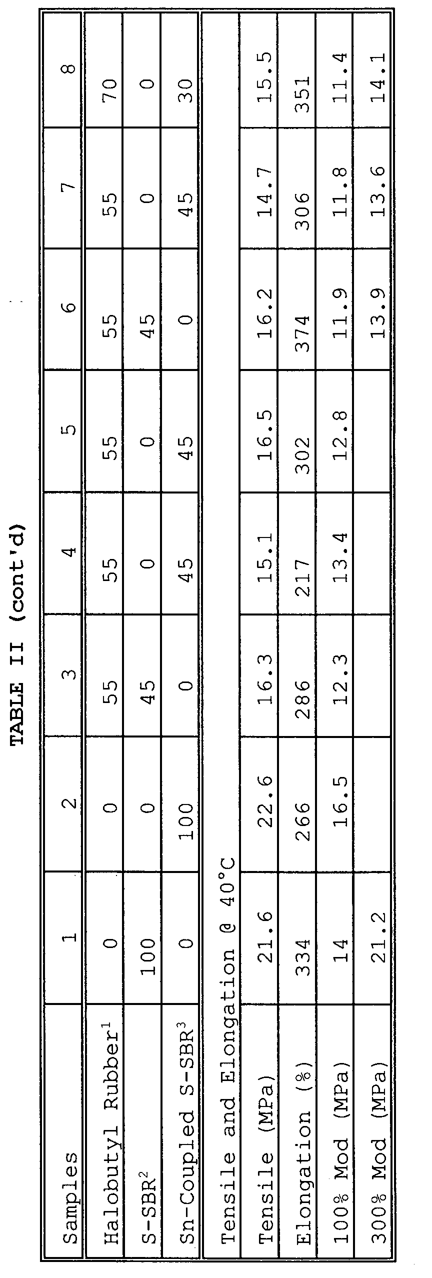

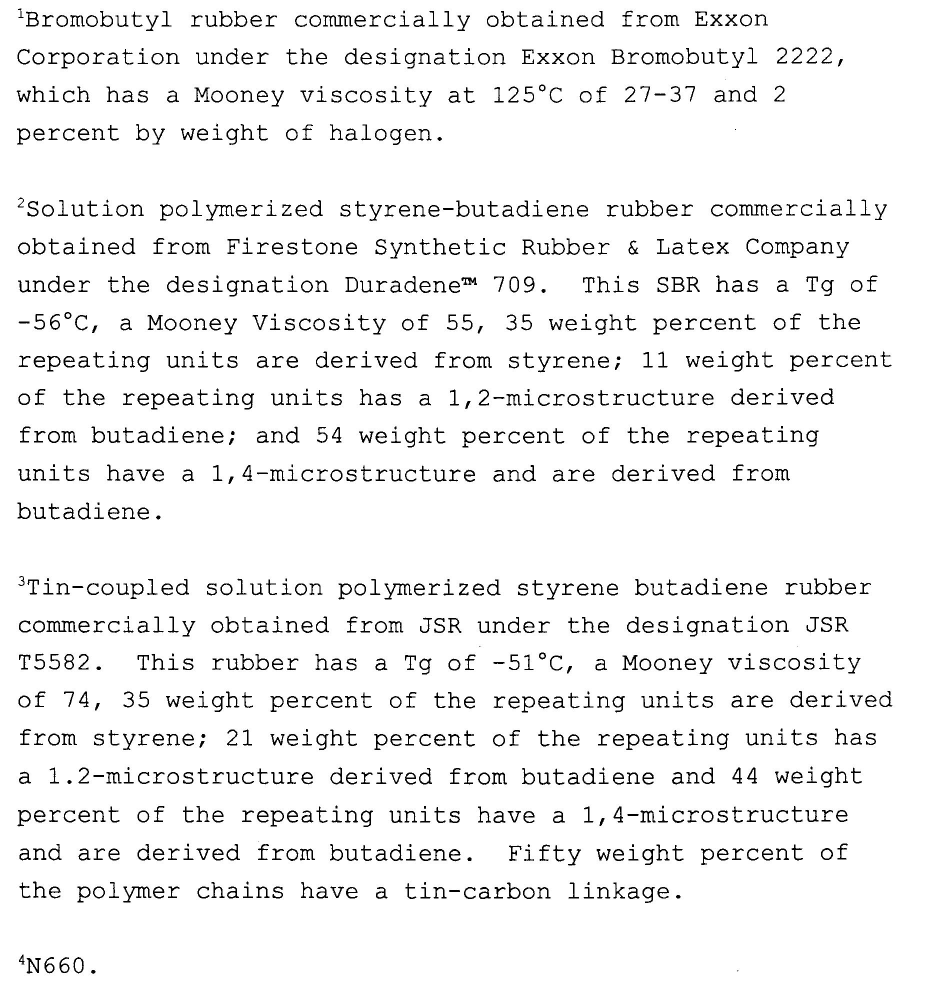

The above table shows the composition and physical properties of two solution-polymerized SBRs (Samples 1 and 2) and their blends with bromobutyl rubber. The solution-polymerized SBR designated as Sample 1 has been shown to give low gas permeability, good flexibility at low temperature (-40°C) and has the properties needed to function satisfactory as a tire innerliner when blended at 45 phr with bromobutyl rubber (Samples 3 and 6). The characteristics of the tin-coupled SBR polymer are shown when used as the sole polymer (Sample 2) and in blends with bromobutyl rubber at 45 phr (Samples 4, 5 and 7) and at 30 phr (Sample 8).

Samples 5 and 6 and Samples 3 and 4 are direct comparisons of the two solution-polymerized SBR polymers blended at 45 phr solution-polymerized SBR/55 phr bromobutyl rubber in similar compounds but with different cure systems. Sample 5 contains the tin-coupled polymer blended with bromobutyl rubber and exhibits lower air and oxygen permeability. Other benefits contributed to the blend by the tin-coupled polymer are higher room temperature and 100°C rebound and higher adhesion of the compound to itself. The higher rebound values indicate lower hysteresis and should help reduce the rolling resistance of the tire. The higher adhesion means a more durable splice in the tire.

Sample 4 contains the tin-coupled solution-polymerized SBR and the blend composition shows better 100°C rebound values than Sample 3. Gas permeabilities for the two samples show conflicting results with the air permeability lower for Sample 4 and the oxygen permeability lower for Sample 3. Both compounds pass the flex test at -40°C indicating excellent low temperature flexibility.

These comparisons show both compositions give low gas permeability, possess good physical properties (tensile, modulus), pass crucial low temperature flex test and show elongations of greater than 200 percent at -40°C. However, the hot rebound is always higher for the tin-coupled solution-polymerized SBR polymer as a result of the less hysteretic polymer filler interactions. The higher rebound of the tin-coupled polymer indicates that, at the running temperature of the tire, contributions of the innerliner to the rolling resistance will be less than with the other solution-polymerized SBR. This data shows that the tin-coupled solution-polymerized SBR polymer gives all the advantages of the non-coupled solution-polymerized SBR, with lower hysteresis, better adhesion and possibly lower gas permeability.

## Claims

1. A tire innerliner prepared from a composition comprising, based on 100 parts by weight of rubber, a blend characterized by
(A) 30 to 50 parts by weight of a tin-coupled solution-polymerized polymer having repeating units and a Tg ranging from -30°C to -60°C, wherein
(1) 20 to 40 weight percent of the repeating units are derived from styrene;
(2) 0 to 50 weight percent of the repeating units are derived from isoprene;
(3) 5 to 40 weight percent of the repeating units have a 1,2-microstructure and are derived from butadiene;
(4) 30 to 60 weight percent of the repeating units have a 1,4-microstructure and are derived from butadiene; and
(5) 10 to 80 percent by weight of the polymer chains of said tin-coupled polymer having a tin-carbon linkage.
(B) 70 to 50 parts by weight of a halobutyl rubber.

2. The tire innerliner of claim 1 characterized in that said halobutyl rubber is selected from the group consisting of chlorobutyl rubber, bromobutyl rubber and mixtures thereof.

3. The tire innerliner of claim 1 characterized in that said blend comprises
(A) 40 to 50 parts by weight of said tin-coupled solution polymerized polymer; and
(B) 60 to 50 parts by weight of a halobutyl rubber.

4. The tire innerliner of claim 1 characterized in that said tin-coupled solution-polymerized polymer has
(1) 20 to 40 weight percent of the repeating units are derived from styrene;
(2) 20 to 40 weight percent of the repeating units have a 1,2-microstructure; and
(3) 30 to 60 weight percent of the repeating units have a 1,4-microstructure.

5. A pneumatic tire having an innerliner prepared from a composition comprising, based on 100 parts by weight of rubber, a blend characterized by
(A) 30 to 50 parts by weight of a tin-coupled solution-polymerized polymer having repeating units and a Tg ranging from -30°C to -60°C, wherein
(1) 20 to 40 weight percent of the repeating units are derived from styrene;
(2) 0 to 50 weight percent of the repeating units are derived from isoprene;
(3) 5 to 40 weight percent of the repeating units have a 1,2-microstructure and are derived from butadiene;
(4) 30 to 60 weight percent of the repeating units have a 1,4-microstructure and are derived from butadiene; and
(5) 10 to 80 percent by weight of polymer chains of said tin-coupled polymer have a tin-carbon linkage.
(B) 70 to 50 parts by weight of a halobutyl rubber.

6. The pneumatic tire of claim 5, characterized in that said halobutyl rubber is selected from the group consisting of chlorobutyl rubber, bromobutyl rubber and mixtures thereof.

7. The tire of claim 5 characterized in that said blend comprises
(A) 40 to 50 parts by weight of said solution polymerized polymer; and
(B) 60 to 50 parts by weight of a halobutyl rubber.

8. The tire of claim 5 characterized in that said solution polymerized polymer has a Tg ranging from -50°C to -60°C.

9. The tire of claim 5 characterized in that
(1) 20 to 40 weight percent of the repeating units are derived from styrene;
(2) 20 to 40 weight percent of the repeating units have a 1,2-microstructure; and
(3) 30 to 60 weight percent of the repeating units have a 1,4-microstructure.

10. The tire of claim 6 characterized in that 60 to 55 parts by weight of said rubber is bromobutyl rubber.
